# EUROPÄISCHE PATENTSCHRIFT

(11) **EP 1 074 835 B1**
(45) Veröffentlichungstag und Bekanntmachung des Hinweises auf die Patenterteilung: **07.06.2006**
(21) Anmeldenummer: 00115694.2
(22) Anmeldetag: 21.07.2000
(51) Int. Cl.: G01N 30/56, B01D 15/08

(54) **Chromatographiesäule mit verbesserten Aufschlämmeigenschaften**
Chromatographic column with improved features for slurry packing
Colonne chromatographique avec des propriétes de remplissage améliorées

(30) Priorität: 02.08.1999 DE 19936337
(43) Veröffentlichungstag der Anmeldung: 07.02.2001
(73) Patentinhaber: InfraServ GmbH & Co. Höchst KG, 65926 Frankfurt am Main (DE)
(72) Erfinder: Simon, Klaus-Jürgen, 65779 Kelkheim (DE); Itter, Klaus, 61184 Karben (DE)
(74) Vertreter: Ackermann, Joachim

(56) Entgegenhaltungen:
- EP-A- 0 515 955
- WO-A-99/22234
- FR-A- 2 543 017
- US-A- 4 549 584

## Beschreibung

Die Erfindung betrifft eine Chromatographiesäule aufweisend einen zylindrischen Säulenkörper mit einer Zylinderachse, einem Durchmesser D, einem ersten Ende und zweiten Ende, das dem ersten Ende gegenüber liegt, einer Trennschicht am ersten Ende und mehreren Aufschlämmeinheiten.

Chromatographiesäulen der genannten Art - im folgenden auch kurz Säulen genannt - sind bekannt, beispielsweise aus der SE 9801433 A entsprechend WO-A-99/22,234. Dieses Dokument offenbart eine Säule mit mindestens einem zentralen Aufschlämmventil, das an der Oberzellvorrichtung und/oder an der Bodenzellvorrichtung positioniert ist. Das zentrale Aufschlämmventil besitzt eine pneumatisch bediente Ventilhülse, die sich verschieben kann, um drei unterschiedliche Strömungsformen zu erzeugen. Eine der Strömungsformen erlaubt ein Wiederaufschlämmen und ein Entfernen von Chromatograhiemedium (Packungsmaterial, Gel) aus der Säule sowie ein nachfolgendes erneutes Füllen der Säule mit frischem Gel ohne jedwede Demontage. Das Aufschlämmen des Gels ist erforderlich, um die Säule wieder mit frischem oder anderem Gel, das für bestimmte Anwendungen spezifisch ist, zu beladen. Die bekannte Säule hat jedoch den Nachteil, daß bei Säulendurchmessern D ab 500 mm das Aufschlämmventil nicht über die gesamte Querschnittsfläche der Säule wirkt. Insbesondere bei Säulen ab Durchmessern von 1000 mm und eine Säulenbettvolumen von mehr als ca. 500 l muß das Gel manuell mittels Paddel aufgeschlämmt werden, was einen erheblichen Arbeits- und Kostenaufwand verursacht.

Aus der US-A-4,549,584 ist ein Verfahren für das Befüllen von Chromatographiesäulen bekannt sowie eine dafür geeignete Vorrichtung. Als Aufschlämmeinheiten werden Füllventile offenbart.

Vor diesem Stand der Technik lag der Erfindung die Aufgabe zugrunde, eine Säule mit verbesserten Aufschlämmeigenschaften bereitzustellen.

Diese Aufgabe wird erfindungsgemäß durch eine Säule der eingangs genannten Art gelöst, bei der mindestens zwei der Aufschlämmeinheiten am ersten und/oder am zweiten Ende in einem Abstand von mindestens D/6 zur Zylinderachse angeordnet sind und die dadurch gekennzeichnet ist, dass die Aufschlämmeinheiten mindestens teilweise als Rührorgane ausgebildet sind.

Gegenstand der Erfindung ist daher eine Chromatographiesäule aufweisend einen zylindrischen Säulenkörper mit einer Zylinderachse, einem Durchmesser D, einem ersten Ende und zweiten Ende, das dem ersten Ende gegenüber liegt, einer Trennschicht am ersten Ende und eine oder mehrere Aufschlämmeinheiten, wobei mindestens zwei der Aufschlämmeinheiten am ersten und/oder am zweiten Ende in einem Abstand von mindestens D/6 zur Zylinderachse angeordnet sind und wobei die Aufschlämmeinheiten mindestens teilweise als Rührorgane ausgebildet sind.

Besondere Ausgestaltungen sind in den Unteransprüchen offenbart. Es können auch einzelne oder mehrere der in den Unteransprüchen offenbarten Merkmale zusammen mit dem Hauptanspruch erfinderische Lösungen der Aufgabe der Erfindung bilden, und es sind auch die einzelnen Merkmale beliebig kombinierbar.

Vorteilhafterweise sind mindestens 4 Aufschlämmeinheiten in einem Abstand von etwa D/4 bzw. unter praktischen Umständen von D/4 symmetrisch oder in gleichem Winkelabstand um die Zylinderachse angeordnet. Die Aufschlämmeinheiten können auch teils als Düsen ausgebildet sein. Die Rührorgane können Blattrührer oder Propellerrührer oder Balkenrührer oder Schnecken oder Schälmesser als Rührmittel aufweisen. In einer besonderen Ausgestaltung sind Teile der Aufschlämmeinheiten als zylindrische Düsen mit Düsenlöchern in die Trennschicht eingesetzt, wobei die Düsenlöcher mehrheitlich in die Mantelfläche der oder jeder Düse eingearbeitet sind.

Vorzugsweise sind die Aufschlämmeinheiten parallel zur Zylinderachse verschiebbar, beispielsweise hydraulisch, pneumatisch oder elektromechanisch, vorzugsweise mittels Mikroprozessor ansteuerbar. Die Aufschlämmeinheiten können am ersten Ende (Boden) oder am zweiten Ende (Deckel) der Säule oder an beiden positioniert sein. In einer weiteren bevorzugten Ausgestaltung sind die Aufschlämmeinheiten an einer Traverse über dem zweiten, d.h. oberen Ende des zylindrischen Säulenkörpers befestigt. Die Traverse ist mit hydraulischen oder pneumatischen oder elektromechanischen Betätigungsmitteln verbunden und so parallel zur Zylinderachse verschiebbar. In einer besonders bevorzugten Ausgestaltung sind die Aufschlämmeinheiten und/oder die Betätigungsmittel elektrisch ansteuerbar und mit einer programmierbaren Steuereinheit verbunden, so daß die Bedienung vollautomatisch und mit vorwählbaren Einstellungen betreffend z. B. Intensität und Dauer des Aufschlämmvorganges durchgeführt werden kann.

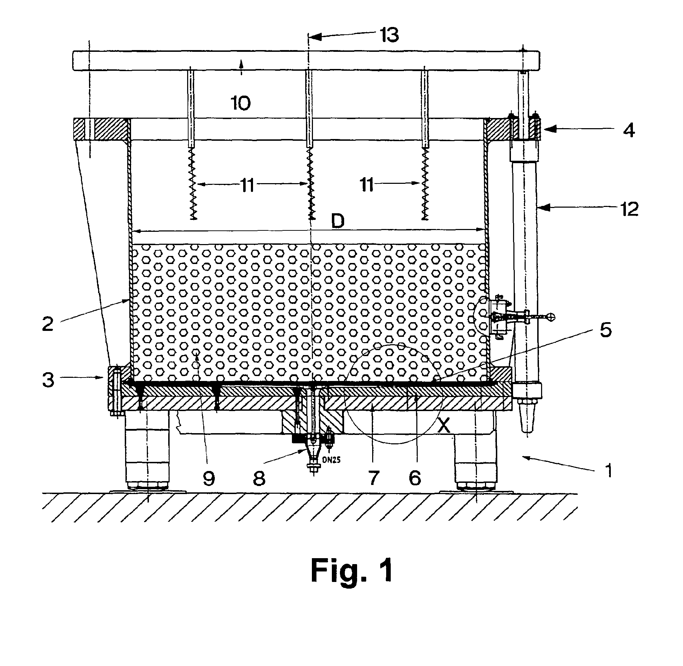

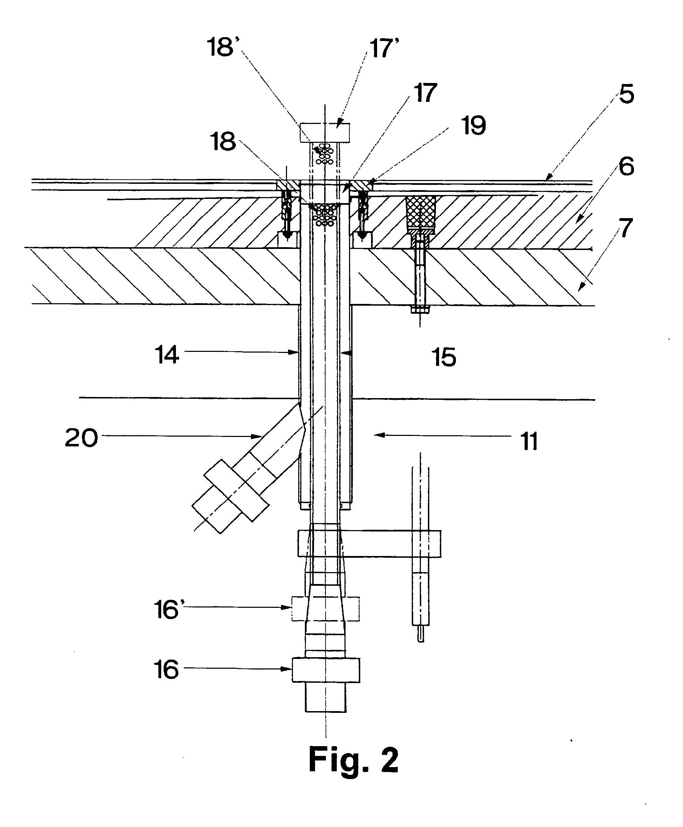

Im folgenden wird die Erfindung anhand der Zeichnungen in den Figuren 1 und 2 näher erläutert. Eine Beschränkung der Erfindung in irgend einer Weise ist dadurch nicht beabsichtigt.

Es zeigt
- Fig. 1:: eine schematische Darstellung einer bevorzugten Ausgestaltung der erfindungsgemäßen Chromatographiesäule im seitlichen Querschnitt;
- Fig. 2:: eine weitere bevorzugte Ausgestaltung an der Stelle des Details X aus der Fig. 1 im seitlichen Querschnitt.

Die Figur 1 zeigt eine senkrecht stehende erfindungsgemäße Säule 1 aufweisend einen zylindrischen Säulenkörper 2 des Durchmessers D, mit einer Zylinderachse 13, einem ersten (unteren) Ende 3, einem zweiten (oberen) Ende 4, das dem ersten Ende 3 gegenüber liegt. Am unteren Ende ist wie üblich eine Filterplatte 5 angeordnet. Unter der Filterplatte befindet sich eine Verteilerplatte 6, die von einem Stützdeckel 7 getragen ist. Verteilerplatte 6 und Stützdeckel 7 sind von einem Ausgang 8 durchbrochen. Die Verteilerplatte 6 ist auf ihrer Oberseite in Richtung Ausgang 8 abfallend angeschrägt, so daß im Betrieb die Elutionsflüssigkeit durch die Filterplatte 7 auf die Verteilerplatte 7 gelangt und durch die Schräge dem Ausgang 8 zufließt. Auf der Filterplatte 5 befindet sich ein Packungsmaterial (Gel) 9. An der Außenseite des Säulenkörpers 2 sind mehrere Betätigungseinrichtungen 12, vorzugsweise Hydraulikzylinder, befestigt, mit denen ein Deckel abgehoben oder ein Kolben in dem Säulenkörper verschoben werden kann. Im erfindungsgemäßen Zusammenbau sind die Betätigungseinheiten 12, mit einem Haltemittel13, einer Traverse; verbunden. An dieser sind erfindungsgemäß mehrere Aufschlämmeinheiten 11, im Beispiel vier von fünf Rührorganen (das mittlere in der Figur ist ein zentrales, ein vorderes und ein hinteres sind nicht sichtbar), in einem Abstand von mindestens D/6 zur Zylinderachse 13 angeordnet.

Nach Beendigung des Chromatographieprozesses werden der Deckel oder der Kolben abmontiert und statt dessen die Traverse 10 mit den Rührorganen 11 mit den Hydraulikzylindern 12 verbunden. Alsdann werden die Rührorgane 11 mittels Traverse 10 und Hydraulikzylinder 12 parallel zur Zylinderachse 13 in Richtung des Säuleninneren nach unten verfahren, so daß die Rührmittel in das Gelbett tauchen und dieses bei Betätigung aufschlämmen.

Die Figur 2 zeigt eine weitere besondere Ausgestaltung, bei der die Aufschlämmeinheiten 11 als Düsen gestaltet sind und am unteren Ende 3 der Säule positioniert sind, und zwar an einem Ort entsprechend dem Detail X aus der Fig.1. Die Düse 11 besteht im wesentlichen aus einem Rohr 14, das von außen durch die Stützplatte 7, die Verteilerplatte 6 und die Filterplatte 5 hindurch gesteckt ist. Es schließt mit einem Ende bündig mit der oberen Oberfläche der Filterplatte 5 ab. Ein Einsatzring 19 fixiert dieses Ende in der Verteilerplatte 5. In dem Rohr 14 ist ein Düsenrohr 15 längsverschiebbar eingesetzt. Das Düsenrohr 15 ist länger als das Rohr 14, so daß es gleichzeitig aus beiden Enden des Rohres 14 herausragen kann. Das Düsenrohr 15 hat an seinem oberen Ende eine Dichtkappe 17, die so ausgelegt ist, daß sie, je nach Stellung des verschiebbaren Düsenrohres 17 das obere Ende des Rohres 14 druckdicht verschließen kann. Am unteren Ende des Rohres 14 ist das Düsenrohr gleitend und abgedichtet gelagert (beispielsweise mittels Stopfbuchse), so daß auch der Raum zwischen den beiden Rohren 14, 15 gegen die Umgebung abgedichtet ist. Am oberen Ende des Düsenrohres 15 befinden sich mehrere Düsenlöcher 18 am Umfang der Rohrwand des Düsenrohres 15 verteilt. Am unteren Ende ist ein Anschluß 16 für Flüssigkeiten angebracht. Das Rohr 14 weist zusätzlich noch einen Anschluß 20 für Flüssigkeiten auf.

Während des Chromatographieprozesses befindet sich das Düsenrohr 15 (bzw. sämtliche Düsenrohre) in der Position, die mit den Ziffern 16, 17 18 bezeichnet ist. Zum Aufschlämmen wird das Düsenrohr ein Stück nach oben, d.h. ins Säuleninnere verschoben, so daß sich die Düsenlöcher 18 oberhalb der Filterplatte in einer Position 18' befinden. Die Dichtkappe 17 befindet sich in einer Position 17' und eröffnet so einen Zugang vom Raum zwischen den Rohren zum Säuleninnenraum. Anschließend wird eine Flüssigkeit unter Druck, z.B. Druckwasser, auf den Anschluß 16, der sich nun in der Position 16' befindet, gegeben, die dann mit hohem Impuls aus den Düsenlöchern 17' radial austritt und dadurch das Packungsmaterial 9 aufschlämmt. Bei Bedarf kann über den Anschluß 20 Packungsmaterial 9 zugegeben oder abgezogen werden oder es kann mit einer anderen Flüssigkeit gespült werden. Von diesen Düsen 11 sind erfindungsgemäß mindestens zwei in einem Abstand von mindestens D/6 zur Säulenachse 13 angeordnet. Je nach Größe der Säule können 3 bis 10 oder mehr Düsen (oder Rührorgane) 11 vorhanden sein. Die Düsen 11 können auch an der Traverse angeordnet sein und so von oben in die Säule eingefahren werden. In den Figuren 1 und 2 ist eine gemischte Anordnung von Düsen und Rührorganen dargestellt.

Der Vorteil der erfindungsgemäßen Säule ist im wesentlichen darin zu sehen, daß das manuelle, arbeits- und daher kostenintensive Aufschlämmen bei Säule mit einem Durchmesser von mehr als 1000 mm und einem (Gel-) Bettvolumen von mehr als 500 l entfallen kann.

## Patentansprüche

1. Chromatographiesäule (1) aufweisend einen zylindrischen Säulenkörper (2) mit einer Zylinderachse (13), einem Durchmesser D, einem ersten Ende (3) und zweiten Ende (4), das dem ersten Ende (3) gegenüber liegt, einer Trennschicht (5) am ersten Ende (3) und mehreren Aufschlämmeinheiten (11), von denen mindestens zwei am ersten und/oder am zweiten Ende (3, 4) in einem Abstand von mindestens D/6 zur Zylinderachse (13) angeordnet sind, **dadurch gekennzeichnet, dass** die Aufschlämmeinheiten (11) mindestens teilweise als Rührorgane ausgebildet sind.

2. Chromatographiesäule nach Anspruch 1, wobei mindestens 4 Aufschlämmeinheiten (11) in einem Abstand von etwa D/4 symmetrisch um die Zylinderachse (13) angeordnet sind.

3. Chromatographiesäule nach Anspruch 1 oder 2, wobei die Aufschlämmeinheiten (11) mindestens teilweise als zylindrische Düsen mit Düsenlöchern (18) in die Trennschicht (5) eingesetzt sind und wobei die Düsenlöcher (18) mehrheitlich in die Mantelfläche der oder jeder Düse eingearbeitet sind.

4. Chromatographiesäule nach einem oder mehreren der Ansprüche 1 bis 3, wobei die Aufschlämmeinheiten (11) parallel zur Zylinderachse (13) verschiebbar sind.

5. Chromatographiesäule nach einem oder mehreren der Ansprüche 1, 2 und 4, wobei die Aufschlämmeinheiten (11) an einer Traverse (10) befestigt sind, die am zweiten Ende (4) des Säulenkörpers (2) positioniert und mittels hydraulischer oder pneumatischer oder elektromechanischer Betätigungsmittel (12) parallel zur Zylinderachse (13) verschiebbar ist.

6. Chromatographiesäule nach einem oder mehreren der Ansprüche 1 bis 5, wobei die Rührorgane (11) Blattrührer oder Propellerrührer oder Schnecken oder Schälmesser als Rührmittel aufweisen.

7. Chromatographiesäule nach einem oder mehreren der Ansprüche 3, 5 und 6, wobei die Aufschlämmeinheiten (11) und/oder die Betätigungsmittel (12) elektrisch ansteuerbar sind und mit einer programmierbaren Steuereinheit verbunden sind.

## Claims

1. A chromatography column (1) comprising a cylindrical column body (2) having a cylinder axis (13), a diameter D, a first end (3) and a second end (4) lying opposite the first end (3), a separation layer (5) at the first end (3) and a plurality of slurry units (11), at least two of which are arranged at a distance of at least D/6 from the cylinder axis (13) at the first and/or second end (3, 4), wherein the slurry units (11) are designed at least partially as stirring members.

2. The chromatography column as claimed in claim 1, wherein at least 4 slurry units (11) are arranged symmetrically at a distance of approximately D/4 around the cylinder axis (13).

3. The chromatography column as claimed in claim 1 or 2, wherein the slurry units (11) are at least partially fitted into the separation layer (5) as cylindrical nozzles with nozzle orifices (18), and wherein the majority of the nozzle orifices (18) are incorporated into the lateral surface of the or each nozzle.

4. The chromatography column as claimed in one or more of claims 1 to 3, wherein the slurry units (11) can be displaced parallel to the cylinder axis (13).

5. The chromatography column as claimed in one or more of claims 1, 2 and 4, wherein the slurry units (11) are fastened on a crossbar (10), which is positioned at the second end (4) of the column body (2) and can be displaced parallel to the cylinder axis (13) by means of hydraulic or pneumatic or electromagnetic actuation means (12).

6. The chromatography column as claimed in one or more of claims 1 to 5, wherein the stirring members (11) comprise paddle stirrers or propeller stirrers or screws or paring blades as stirring means.

7. The chromatography column as claimed in one or more of claims 3, 5 and 6, wherein the slurry units (11) and/or the actuation means (12) are electrically drivable and are connected to a programmable control unit.

## Revendications

1. Colonne de chromatographie (1) comportant un corps de colonne cylindrique (2) avec un axe de cylindre (13), un diamètre D, une première extrémité (3) et une seconde extrémité (4) faisant face à la première extrémité (3), une couche de séparation (5) au niveau de la première extrémité (3) et plusieurs unités de décantation (11), dont au moins deux sont disposées au niveau de la première et/ou de la seconde extrémité (3, 4), à une distance d'au moins D/6 de l'axe de cylindre (13), **caractérisée en ce que** les unités de décantation (11) sont formées au moins partiellement en tant qu'organes d'agitation.

2. Colonne de chromatographie selon la revendication 1, dans laquelle au moins 4 unités de décantation (11) sont disposées à une distance d'environ D/4 de façon symétrique autour de l'axe de cylindre (13).

3. Colonne de chromatographie selon la revendication 1 ou 2, dans laquelle les unités de décantation (11) sont montées au moins partiellement en tant qu'injecteurs cylindriques avec des orifices d'injection (18) dans la couche de séparation (5) et dans laquelle les orifices d'injection (18) sont majoritairement formés dans la surface extérieure de l'injecteur.

4. Colonne de chromatographie selon une ou plusieurs des revendications 1 à 3, dans laquelle les unités de décantation (11) sont mobiles parallèlement à l'axe de cylindre (13).

5. Colonne de chromatographie selon une ou plusieurs des revendications 1, 2 et 4, dans laquelle les unités de décantation (11) sont fixées à une traverse (10) qui est positionnée au niveau de la seconde extrémité (4) du corps de colonne (2) et qui est mobile parallèlement à l'axe de cylindre (13) grâce à un moyen d'actionnement hydraulique, pneumatique ou électromécanique (12).

6. Colonne de chromatographie selon une ou plusieurs des revendications 1 à 5, dans laquelle les organes d'agitation (11) comprennent des agitateurs à pales, des agitateurs à hélice, des vis sans fin ou des couteaux comme moyen d'agitation.

7. Colonne de chromatographie selon une ou plusieurs des revendications 3, 5 et 6, dans laquelle les unités de décantation (11) et/ou le moyen d'actionnement (12) peuvent être commandés électriquement et sont reliés à une unité de commande programmable.
